# EUROPEAN PATENT SPECIFICATION

(11) **EP 4 456 706 B1**
(45) Date of publication and mention of the grant of the patent: **03.09.2025**
(21) Application number: 21848083.8
(22) Date of filing: 27.12.2021
(51) Int. Cl.: A01D 34/74

(54) **CUTTING DECK HEIGHT ADJUSTMENT FOR A RIDING LAWN MOWER**
SCHNEIDWERKSHÖHENEINSTELLUNG FÜR EINEN AUFSITZRASENMÄHER
RÉGLAGE DE HAUTEUR DE PLATEAU DE COUPE POUR UNE TONDEUSE À GAZON AUTOPORTÉE

(43) Date of publication of application: 06.11.2024
(73) Proprietor: HUSQVARNA AB, 561 82 Huskvarna (SE)
(72) Inventor: SOUTHWELL, John, Huntersville, North Carolina 28078 (US)
(74) Representative: Meissner Bolte Nürnberg
(86) International application number: PCT/US2021/065197
(87) International publication number: WO 2023/129123

(56) References cited:
- EP-A1- 1 958 492
- EP-A1- 3 178 305
- EP-A1- 3 282 826
- US-A1- 2007 169 456
- US-A1- 2013 247 528
- US-A1- 2016 263 677
- US-A1- 2020 329 637
- US-B1- 11 006 574

## Description

### TECHNICAL FIELD

The present disclosure generally relates to lawn care vehicles with a center mounted cutting deck and, more particularly, to a height adjustment system for adjusting the cutting deck height of such a lawn care vehicle.

### BACKGROUND

Lawn care tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers. Walk-behind lawn mowers are typically compact, have comparatively small engines and are relatively inexpensive. Meanwhile, at the other end of the spectrum, riding lawn mowers, such as zero turn mowers and lawn tractors, can be quite large. Riding lawn mowers provide the convenience of a riding vehicle as well as a typically larger cutting deck as compared to a walk-behind model. Similarly, riding lawn care vehicles typically provide users with increased convenience by enabling them to perform the yard maintenance tasks faster without exerting effort to push or walk with a vehicle.

As can be appreciated from the description above, riding lawn care vehicles may come in many different sizes and may have wide variances in their capabilities. However, beyond mere changes in size and function, riding lawn care vehicles can also be produced with a great deal of precision in relation to the configurations via which various ones of the functions they can perform are provided. For example, some riding yard maintenance vehicles may have cutting decks mounted between the front and rear wheels with an adjustable height. Depending on the particular scenario, the user may desire to alter the height of the cutting deck in order to achieve a particular length of cut for the yard. Document US11006574 B1 discloses such a riding lawn care vehicle provided with a frame to which wheels are attached, a seat, a cutting deck and a deck height adjustment assembly. The adjustment assembly comprises a carriage assembly and a rotary assembly which are operable by the operator using a pedal and a knob, which in turn effect a linkage assembly to rotate a stepped cylinder to a desired position and to engage a pawl with the stepped cylinder, allowing the operator to adjust and set a height for the cutting deck.

Thus, it may be advantageous to provide an assembly that is capable of reducing the time and effort required to adjust the height of the cutting deck.

### BRIEF SUMMARY OF THE INVENTION

The subject of the present invention is set forth in the claims.

Embodiments provide for a riding lawn care vehicle including a frame to which wheels of the riding lawn care vehicle are attachable, a seat in which an operator of the riding lawn care vehicle may be positioned when operating the riding lawn care vehicle, a cutting deck that is operably coupled to the frame and comprises a cutting blade and a housing frame, wherein the housing frame is configured to support a housing inside which the cutting blade is housed, and a deck height adjustment assembly that comprises a carriage assembly and a rotary assembly, wherein the carriage assembly and the rotary assembly are operable by the operator positioned in the seat.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1A illustrates a perspective view of a riding lawn care vehicle according to an example embodiment;
FIG. 1B illustrates a top view of the riding lawn care vehicle according to an example embodiment;
FIG. 2 illustrates a side view of the riding lawn care vehicle according to an example embodiment;
FIG. 3 illustrates a schematic block diagram of a riding lawn care vehicle according to an example embodiment;
FIG. 4A illustrates a perspective view of a deck height adjustment assembly according to an example embodiment;
FIG. 4B illustrates a close-up perspective view of a rotary assembly from the deck height adjustment assembly of FIG. 4A according to an example embodiment;
FIG. 4C illustrates a close-up perspective view of a rotary assembly from the deck height adjustment assembly of FIG. 4A according to an example embodiment;
FIG. 4D illustrates a close up perspective view of a carriage assembly from the deck height adjustment assembly of FIG. 4A according to an example embodiment;
FIG. 4E illustrates a close up perspective view of the connection between the carriage assembly and the rotary assembly from the deck height adjustment assembly of FIG. 4A according to an example embodiment;
FIG. 5 illustrates a top view of a rotary selector according to an example embodiment; and
FIG. 6 illustrates a top view of a rotary selector according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. Additionally, the term "lawn care" is meant to relate to any yard maintenance activity and need not specifically apply to activities directly tied to grass, turf or sod care. As used herein, operable coupling should be understood to relate to direct or indirect connection that, in either case, enables functional interconnection of components that are operably coupled to each other. Although terms such as equipment, attachment, accessory and/or the like may each be used to generally interchangeably to describe components of various devices, some of these terms may be used to differentiate certain components of example embodiments for purposes of clarity.

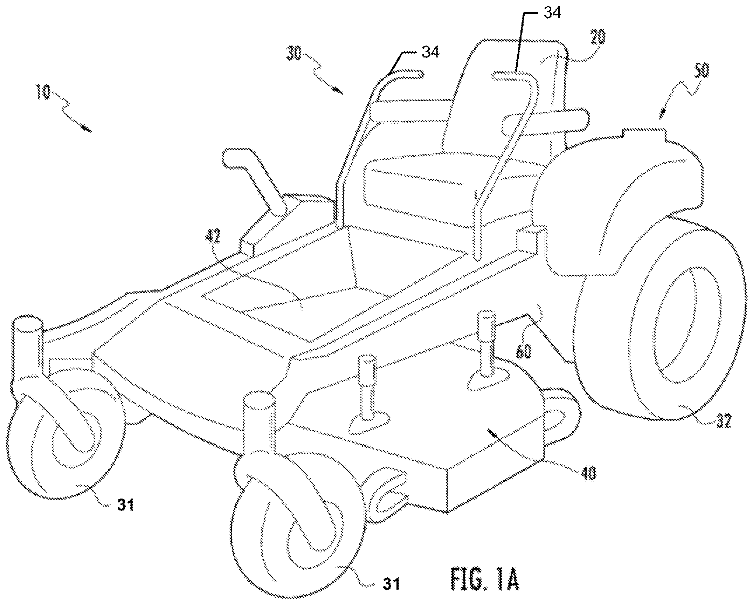

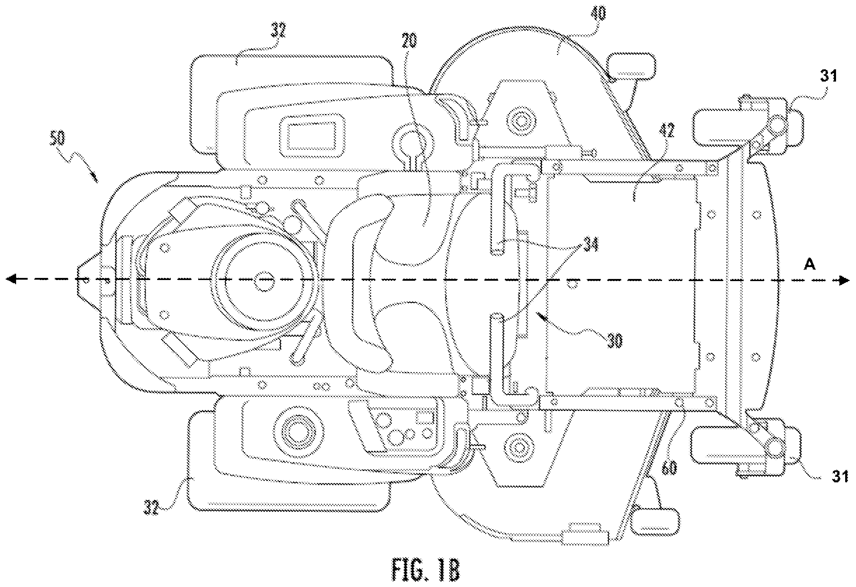

FIG. 1A illustrates a perspective view of a riding lawn care vehicle 10 and FIG. 1B illustrates a top view of the riding lawn care vehicle 10 according to an example embodiment. The riding lawn care vehicle 10 includes a seat 20 that may be disposed at a center, rear, or front portion of the riding lawn care vehicle 10. The riding lawn care vehicle 10 may also include a steering assembly 30 (e.g., a set of steering levers or the like) functionally connected to wheels 31 and/or 32 of the riding lawn care vehicle 10 to allow the operator to steer the riding lawn care vehicle 10.

In the depicted example, the operator may sit on the seat 20, which may be disposed between steering levers 34 of the steering assembly 30 to provide input for steering of the riding lawn care vehicle 10 via the steering assembly 30. The riding lawn care vehicle 10 also includes a cutting deck 40 having at least one cutting blade (e.g., three cutting blades) mounted therein. The cutting deck 40 may be positioned substantially rearward of a pair of front wheels 31 and substantially forward of a pair of rear wheels 32 in a position to enable the operator to cut grass using the cutting blade(s) when the cutting blade(s) are rotated below the cutting deck 40 when the cutting deck 40 is in a cutting position.

In some embodiments, a footrest 42 may also be positioned above the cutting deck 40 forward of the seat 20 to enable the operator to rest his or her feet thereon while seated in the seat 20. In the pictured embodiment, an engine 50 of the riding lawn care vehicle 10 is disposed to the rear of a seated operator. However, in other example embodiments, the engine 50 could be in different positions such as in front of or below the operator. The engine 50 may be operably coupled to one or more of the wheels 31 and/or 32 (in this case only to the rear wheels 32) to provide drive power for the riding lawn care vehicle 10. The engine 50, the steering assembly 30, the cutting deck 40, the seat 20, and other components of the riding lawn care vehicle 10 may be operably connected (directly or indirectly) to a frame 60 of the riding lawn care vehicle 10. The frame 60 may be a rigid structure configured to provide support, connectivity, and/or interoperability functions for various ones of the components of the riding lawn care vehicle 10.

As can be appreciated from FIG. 1A, the footrest 42 may be substantially lower (in elevation) than the seat 20 in order to comfortably support a seated operator on the seat 20. This results in an elevated seat 20 that is disposed atop a seat mounting structure that is operably coupled to the frame 60. In some embodiments, such as the one depicted in FIGS. 1A and 1B, the riding lawn care vehicle may be of the type to have a zero or near zero degree radius of turn. However, in other embodiments, other types of riding lawn care vehicles may be used.

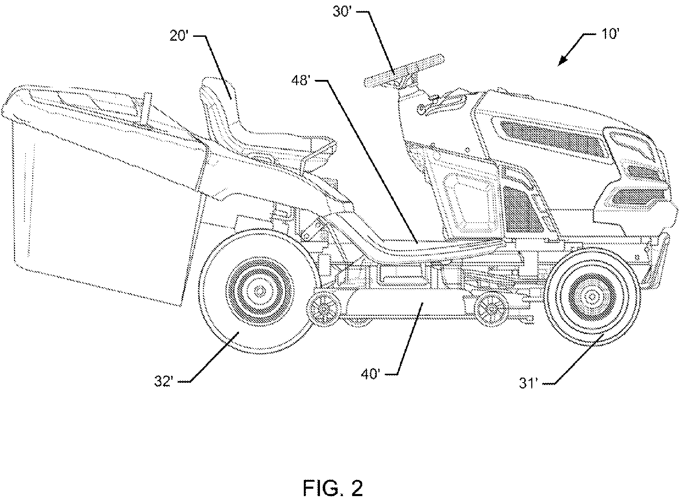

FIG. 2 illustrates a riding lawn care vehicle 10' of a lawn tractor type. The riding lawn care vehicle 10' includes a seat 20' that may be disposed at a center, rear, or front portion of the riding lawn care vehicle 10', and a steering assembly 30' (e.g., including a steering wheel, handle bars, or other steering apparatus) functionally connected to wheels 31' and/or 32' of the riding lawn care vehicle 10' to which steering inputs are provided (e.g., the front and/or rear wheels in various different embodiments) to allow the operator to steer the riding lawn care vehicle 10'. The operator may sit on the seat 20', which may be disposed to the rear of a steering assembly 30' to provide input for steering of the riding lawn care vehicle 10' via the steering assembly 30'.

The riding lawn care vehicle 10' also includes a cutting deck 40' having at least one cutting blade mounted therein. A height of the at least one cutting blade is adjustable by an operator of the riding lawn care vehicle 10'. The cutting deck 40' may be a fixed or removable attachment in various different embodiments. In some embodiments, the cutting deck 40' may be lifted or rotated relative to the lawn mower frame to permit easier access to the underside of the lawn mower without requiring removal of the cutting deck 40'. The cutting deck 40' may have one, two, three, or more cutting blades driven by one, two, three, or more rotatable shafts. The shafts may be rotated by any number of mechanisms. For example, in some embodiments, the shafts are coupled to a motor via a system of belts and pulleys. In other embodiments, the shafts may be coupled to the motor via a system of universal joints, gears, and/or other shafts. In still other embodiments, such as in an electric lawn mower, the shaft may extend directly from an electric motor positioned over the cutting deck.

The riding lawn care vehicle 10' may also include additional control-related components such as one or more speed controllers, brakes, cutting height adjusters, and/or the like. Some of the controllers, such as the speed controllers and/or brakes, may be provided in the form of foot pedals that may sit proximate to a footrest 48' (which may include a portion on both sides of the riding lawn care vehicle 10') to enable the operator to rest his or her feet thereon while seated in the seat 20'. In some embodiments, one such control-related component is a cutting deck height adjustment assembly, which includes a foot pedal to lift the cutting deck away from a cutting position. More details on the deck height adjustment assembly will be discussed below in reference to later figures.

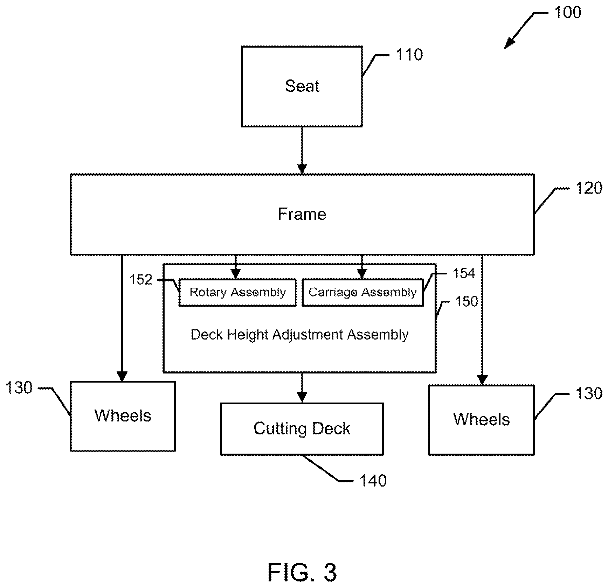

FIG. 3 illustrates a simplified block diagram of a riding lawn care vehicle 100 according to an example embodiment. The riding lawn care vehicle 100 may be an example of either a zero turn mower (the embodiment described in FIGS. 1A and 1B), a lawn tractor (the embodiment described in FIG. 2), or any other form of riding lawn care vehicle 100. As shown in FIG. 3, the riding lawn care vehicle 100 includes a seat 110, a frame 120, wheels 130, a cutting deck 140, and a deck height adjustment assembly 150. The cutting deck 140 is operably coupled to the frame 120 via the deck height adjustment assembly 150. The deck height adjustment assembly 150 includes a rotary assembly 152 and a carriage assembly 154. Both the rotary assembly 152 and the carriage assembly 154 operably couple the deck height adjustment assembly 150 to the frame 120. Additionally, both the rotary assembly 152 and the carriage assembly 154 may include components intended to be interacted with by the operator of the riding lawn care vehicle 100. Accordingly, these components may be within reasonable reach of the seat 110 such that an operator may interact with both the rotary assembly 152 and the carriage assembly 154, while seated in the seat 110, in order to set a height of the cutting deck 140. In this regard, setting the height of the cutting deck 140 via the deck height adjustment assembly 150 involves the operator utilizing the carriage assembly 154 to elevate the cutting deck 140 away from a cutting position and into an elevated position. While maintaining the cutting deck 140 in the elevated position, the operator may then utilize the rotary assembly 152 to select a desired height for the cutting deck 140 to assume upon being released from the elevated position. The operator may then release the cutting deck 140 from the elevated position and the cutting deck 140 may lower into a new height as desired.

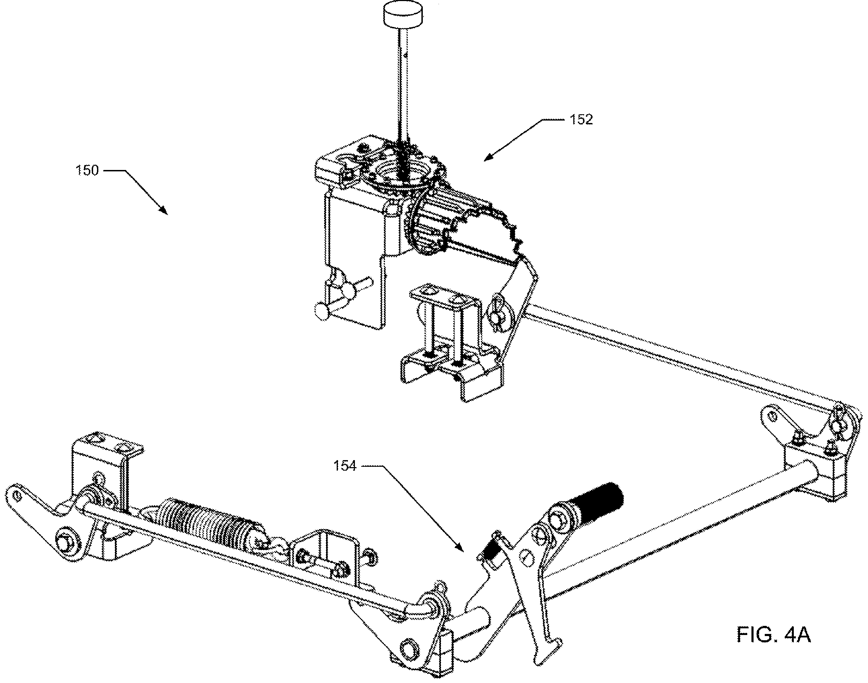

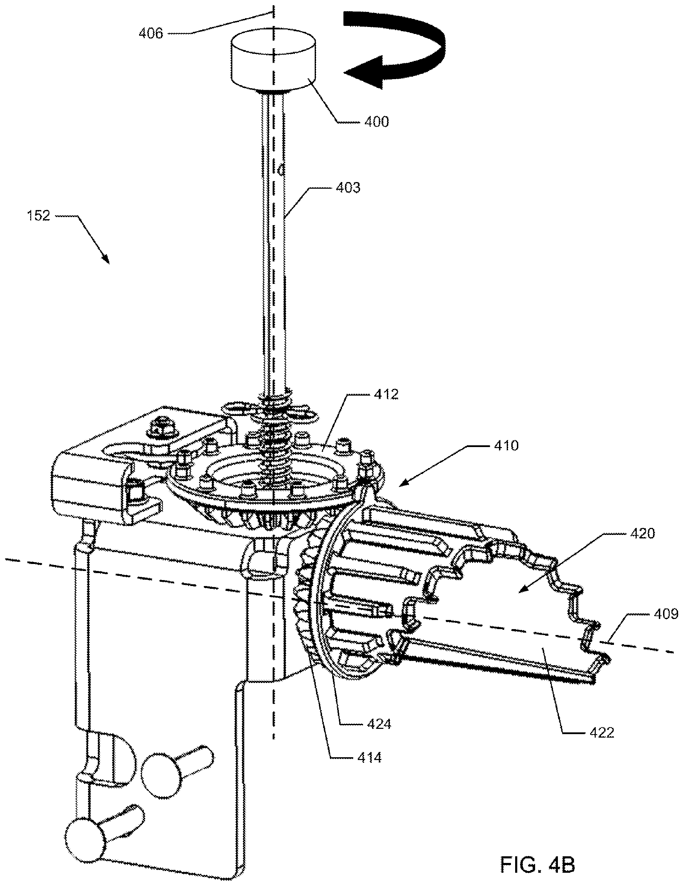

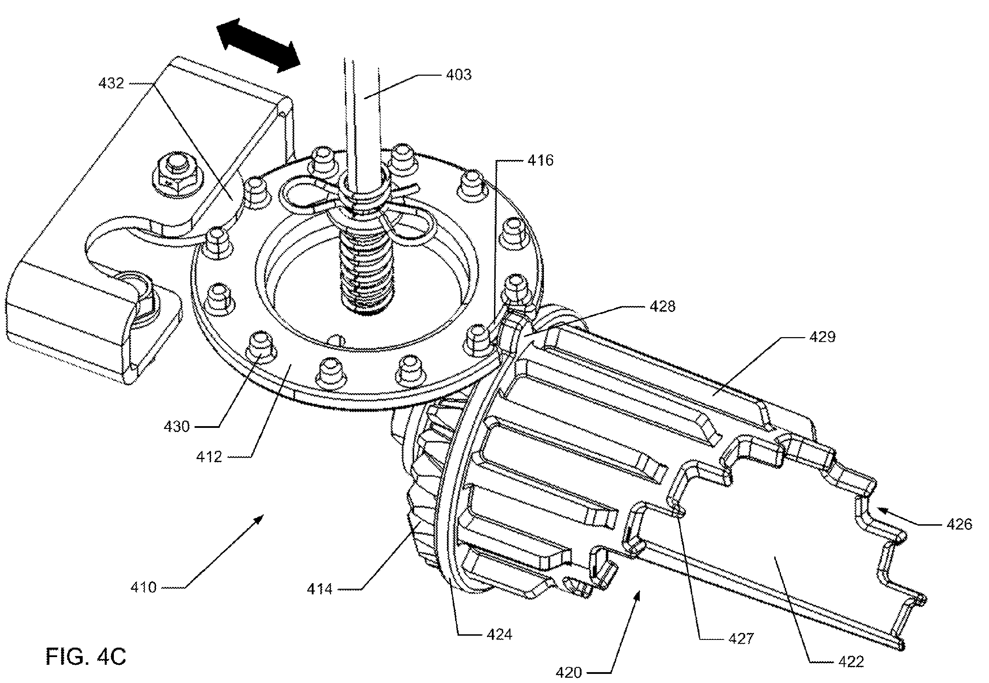

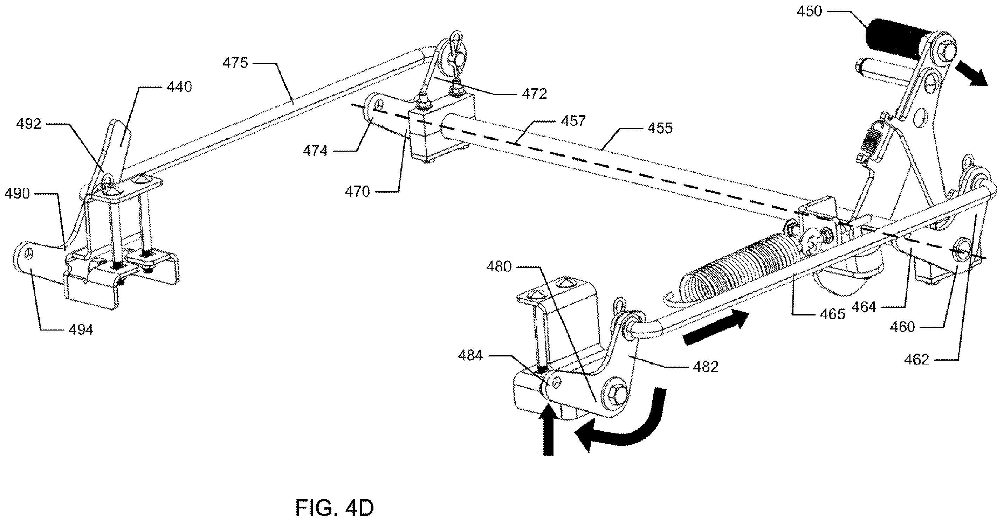

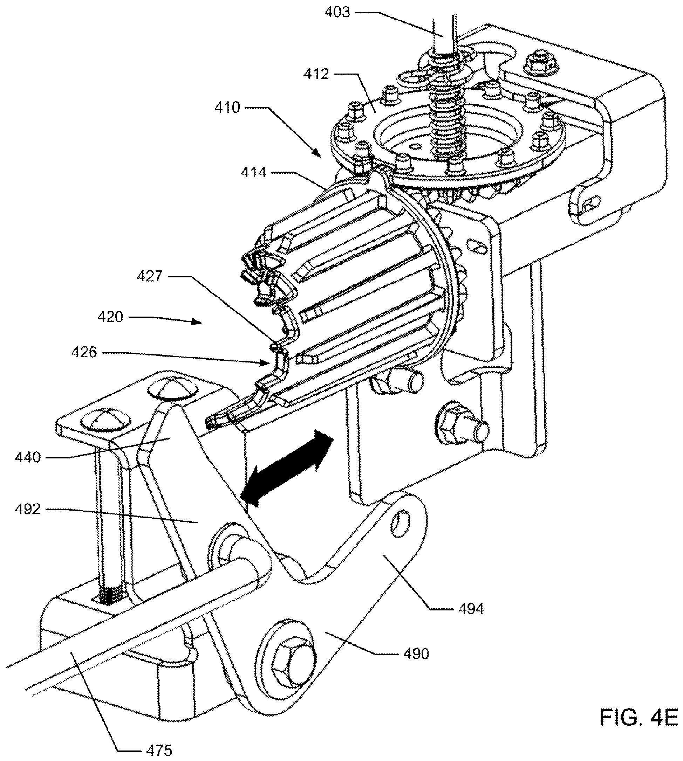

FIG. 4A illustrates a perspective view of the entire deck height adjustment assembly 150 according to an example embodiment. The deck height assembly 150 shown in FIG. 4A includes the rotary assembly 152 operably coupled to the carriage assembly 154. FIGS. 4B, 4C, 4D, and 4E depict close up views of the rotary assembly 152 and the carriage assembly 154. Accordingly, the rotary assembly 152 and the carriage assembly 154 will be discussed separately with respect to later figures below.

FIGS. 4B and 4C illustrate close up perspective views of the rotary assembly 152 from the deck height adjustment assembly 150 of FIG. 4A. The rotary assembly 152 comprises a rotary selector 400, a bevel gear assembly 410, and a deck height spacer 420. The rotary selector 400 is a rotatable selector mechanism. The rotary selector 400 is disposed on the frame and may also be within reasonable reach of the seat 110. The rotary selector 400 is configured to be rotated by the operator in order to select a desired height for the cutting deck 140 to operate at. In this regard, the rotary selector 400 is operably coupled to the bevel gear assembly 410 via a shaft 403. The shaft 403 may be configured to transfer all rotational torque applied to the rotary selector 400 by the operator to the bevel gear assembly 410. In some embodiments, the bevel gear assembly 410 may include a first bevel gear 412 and a second bevel gear 414. The first bevel gear 412 may be fixedly operably coupled to the shaft 403. As such, the shaft 403 may transfer all rotational torque from the rotary selector 400 to the first bevel gear 412 of the bevel gear assembly 410. In this regard, the rotary selector 400, the shaft 403 and the first bevel gear 412 may all be coaxial about a first axis 406 of rotation.

The second bevel gear 414 may be disposed at an angle to the first bevel gear 412 and may rotate about a second axis 409 of rotation. In this regard, the second bevel gear 414 may be disposed such that an angle between the first axis 406 and the second axis 409 may be roughly 90 degrees. The first bevel gear 412 may be configured to transfer all rotational torque from the rotary selector 400 to the second bevel gear 414 via the interaction of gear teeth between the first bevel gear 412 and the second bevel gear 414 in the bevel gear assembly 410. In some embodiments, the gear teeth on the first bevel gear 412 may be disposed at an angle between 0 degrees and 90 degrees so that they may effectively interlace with the gear teeth on the second bevel gear 414, which may also be disposed at an angle between 0 degrees and 90 degrees.

In the embodiment depicted in FIGS. 4B and 4C, the second bevel gear 414 may be disposed at an end of, and fixedly operably coupled to, the deck height spacer 420. In some embodiments, the deck height spacer 420 and the second bevel gear 414 may be coaxial about the second axis 409. In this regard, the second bevel gear 414 may be configured to transfer all rotational torque from the rotary selector 400 to the deck height spacer 420. The deck height spacer 420 is embodied as a cylindrical body which includes a circumferential surface 422 and a base portion 424. In some cases, the base portion 424 may be operably coupled to the second bevel gear 414. The circumferential surface 422 of the deck height spacer 420 may extend in a direction normal to the base portion 424 at a constant radius around the second axis 409. The circumferential surface 422 also includes a plurality of radial segments 426 formed therein. In this regard, the circumferential surface 422 of the deck height spacer 420 includes a step-like structure wherein each of the plurality of radial segments 426 is disposed a greater distance away from the base portion 424 than a previous radial segment 426 in a clockwise direction around the circumferential surface 422. The circumferential surface 422 may also include a plurality of reinforcement members 429 that may be disposed on an exterior of the circumferential surface 422. In some embodiments, the reinforcement members 429 may align with individual radial segments 426 of the deck height spacer 420. In this regard, the reinforcement members 429 may help the radial segments 426 to withstand any forces exerted thereon. In some embodiments, each radial segment 426 may also include a retaining lip 427 protruding in the axial direction perpendicular to the base portion 424. The retaining lip 427 may occupy a position on an edge of the radial segment 426 so that the radial segment 426 may better retain an object without the object inadvertently dropping down into a neighboring radial segment 426. In some embodiments, the deck height spacer 420 may comprise a total of 12 radial segments 426. In this regard, each radial segment 426 may occupy a sector of roughly 30 degrees with respect to the total 360 degrees of the cylindrical body. In some embodiments, the bevel gear assembly 410 may be configured such that a full range of radial segments 426 may be covered with one full rotation of the rotary selector 400. As such, the operator may not need to rotate the rotary selector 400 more than one full rotation in order to reach a desired setting. More details on the radial segments 426 and retaining the object will be described below in reference to the carriage assembly 154.

In some embodiments, the base portion 424 may include a reference protrusion 428. The reference protrusion 428 may be configured to align with a reference notch 416 that may be cut into the first bevel gear 412. In this regard, the alignment of the reference protrusion 428 with the reference notch 416 may indicate that the rotary assembly 152 may be installed in a correct position such that a plurality of height indications on the frame 120 proximate to the rotary selector 400, correspond to the proper radial segments 426 on the deck height spacer 420.

FIGS. 4B and 4C also depict a plurality of protrusions 430 disposed on a top face of the first bevel gear 412. The protrusions 430 may be configured to interact with a washer 432 proximate to the top face of the first bevel gear 412. In some embodiments, the washer 432 may be biased towards the first bevel gear 412 via a spring (not shown). In this regard, the washer 432 may provide tactile feedback to the operator applying the rotational torque to the rotary selector 400. In other words, as the operator turns the rotary selector 400, the shaft 403 transmits the rotational torque to the first bevel gear 412 which then rotates about axis 406 accordingly. As the first bevel gear 412 rotates, the protrusions 430 also rotate around the first axis 406 and, in doing so, come into contact with the washer 432. As such, the protrusions 430 may push the washer 432 away from the first bevel gear 412 as the protrusions 430 rotate around. However, the washer 432 may move towards the first bevel gear 412 as the first bevel gear 412 rotates responsive to lining up between two consecutive protrusions 430. In this regard, the repeated back and forth motion of the washer 432, that may be ultimately induced by the operator rotating the rotary selector 400, may accordingly generate a clicking noise and feeling that may provide a sense of tactile feedback to the operator at the rotary selector 400 to indicate the passing or selecting of one of a plurality of height selections.

FIG. 4D illustrates a close up perspective view of the carriage assembly 154 from the deck height adjustment assembly 150 of FIG. 4A. The carriage assembly 154 includes a height selector arm 440, a foot pedal 450, a pivot bar 455, a first bell crank 460, a second bell crank 470, a third bell crank 480 and a fourth bell crank 490. The carriage assembly 154 is configured to lift the cutting deck 140 responsive to the operator depressing the foot pedal 450. In some embodiments, the foot pedal 450 may be fixedly operably coupled to the pivot bar 455. In this regard, as the foot pedal 450 is depressed by the operator, the foot pedal 450 may pivot with the pivot bar 455 about an axis 457. The pivot bar 455 may be fixedly operably coupled to the first bell crank 460 at a first end of the pivot bar 455 and to the second bell crank 470 at a second end of the pivot bar 455. In this regard, as the pivot bar 455 rotates responsive to the operator applying a force on the foot pedal 450, the first bell crank 460 and the second bell crank 470 may each also pivot about axis 457.

The first bell crank 460 may include a first arm 462 that may be operably coupled to a first linking rod 465, and a second arm 464 that may be operably coupled to the cutting deck 140. Similarly, the second bell crank 470 may include a first arm 472 that may be operably coupled to a second linking rod 475, and a second arm 474 that may be operably coupled to the cutting deck 140. The first and second linking rods 465 and 475 may operably couple the first and second bell cranks 460 and 470 with the third and fourth bell cranks 480 and 490, respectively. In this regard, the first bell crank 460 may be operably coupled to a first arm 482 of the third bell crank 480 via the first linking rod 465. Similarly, the second bell crank 470 may be operably coupled to a first arm 492 of the fourth bell crank 490 via the second linking rod 475. In this regard, responsive to the operator interacting with the foot pedal 450, the linking rods 465 and 475 may be configured to transfer force from the first and second bell cranks 460 and 470 to the third and fourth bell cranks 480 and 490, respectively. Accordingly, the third and fourth bell cranks 480 and 490 may each pivot a same amount as the first and second bell cranks 460 and 470. The third and fourth bell cranks 480 and 490 may also include second arms 484 and 494 which may also be operably coupled to the cutting deck 140. Therefore, responsive to the operator depressing the foot pedal 450 in FIG. 4D, each of the first, second, third and fourth bell cranks (460, 470, 480, and 490) may pivot such that the first arms (462, 472, 482, and 492) may each move towards a distal end of the foot pedal 450. Accordingly, the second arms (464, 474, 484, and 494) may each move in the same direction, but, in doing so, the second arms (464, 474, 484, and 494) may lift the cutting deck 140 away from a surface on which the riding lawn care vehicle 100 may operate. In this regard, FIG. 4D illustrates that, as the foot pedal 450 may be depressed, the first linking rod 465 may impart a linear force on the third bell crank 480 to pull the first arm 482 towards the foot pedal 450. Accordingly, the third bell crank 480 may rotate clockwise, and thus, the second arm 484 may pull up on the cutting deck 140. A similar set of actions may occur simultaneously with respect to the second linking rod 475 and the fourth bell crank 490.

FIG. 4E depicts a close up perspective view of the connection structure between the carriage assembly 154 and the rotary assembly 152 according to an example embodiment. As shown in FIG. 4E, the height selector arm 440 may move from an engaged state to a disengaged state responsive to the operator depressing the foot pedal 450 and the fourth bell crank 490 pivoting. In this regard, when the operator applies a force on the foot pedal 450, the height selector arm 440 may move to the disengaged state where the height selector arm 440 does not come into contact with any other components of the deck height assembly 150. For clarification purposes, FIG. 4E depicts the height selector arm 440 in the disengaged state. On the other hand, when the carriage assembly 154 is in a resting position (e.g. with no forces applied to the foot pedal 450 and the cutting deck 140 in a cutting position) the height selector arm 440 may be in the engaged state where it is in contact with a given radial segment 426 of the deck height spacer 420. Accordingly, the deck height spacer 420, and the given radial segment 426, may support the fourth bell crank 490 and the height selector arm 440 in one of a plurality of positions responsive to the operator releasing the foot pedal 450. In other words, depending on a particular height selected by the operator at the rotary selector 400, the deck height spacer 420 may rotate to position a corresponding radial segment 426 with the height selector arm 440 such that the radial segment 426 supports the height selector arm 440 in the engaged state. Accordingly, the retaining lip 427 may secure the height selector arm 440 within a desired radial segment 426 such that the height selector arm 440 does not leave the engaged state with the radial segment 426 unintentionally. In this regard, each radial segment 426 may correspond to a different height to which the cutting deck 140 may be set. In other words, in order to adjust a height of the cutting deck 140 on the riding lawn care vehicle 100, the operator must simply depress the foot pedal 450, and with the foot pedal 450 depressed, turn the rotary selector 400 to a desired height setting. Upon releasing the foot pedal 450, the cutting deck 140 may be at a new height selected by the operator.

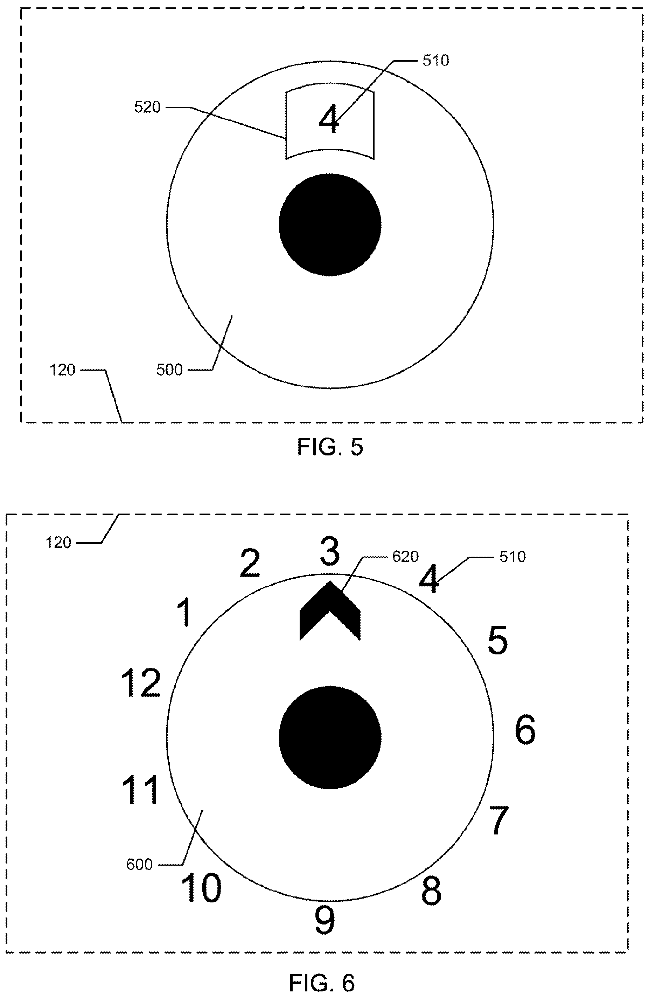

FIG. 5 depicts a rotary selector 500 according to an example embodiment. In the embodiment of FIG. 5, the riding lawn care vehicle 100 may include a plurality of height indications 510 printed on the frame 120 behind the rotary selector 500 when viewed from above. In this regard, the rotary selector 500 may include a selection indicator 520 in the form of a viewing window. In some embodiments, the selection indicator 520 may be made of a transparent material such as a plastic. In some other cases, the selection indicator 520 may simply be an empty space cut into the rotary selector 500. In any case, the rotary selector 500 may be configured such that the height indication 510 that may be visible through the viewing window may correspond to a selected height setting of the cutting deck 140. In order to change the selected height setting, the operator may rotate the rotary selector 500 in either the clockwise or counter clockwise direction. As mentioned above, a full range of height indications 510 may be covered with one full rotation of the rotary selector 500. As such, the operator may not need to rotate the rotary selector 500 more than one full rotation in order to reach a desired height indication 510.

FIG. 6 depicts a rotary selector 600 according to an example embodiment. In the embodiment of FIG. 6, the riding lawn care vehicle 100 may include a plurality of height indications 510 printed on the frame 120 around the rotary selector 600 when viewed from above. In this regard, the rotary selector 600 may include a selection indicator 620 in the form of an indicating arrow. In some embodiments, the selection indicator 620 may be painted on the rotary selector 600. In some other cases, the selection indicator 620 may formed into the rotary selector 600. In any case, the rotary selector 600 may be configured such that the height indications 510 that may be disposed at a tip of the indicating arrow may correspond to a selected height setting of the cutting deck 140. In order to change the selected height setting, the operator may rotate the rotary selector 600 in either the clockwise or counter clockwise direction. As mentioned above, a full range of height indications 510 may be covered with one full rotation of the rotary selector 600. As such, the operator may not need to rotate the rotary selector 600 more than one full rotation in order to reach a desired height indication 510.

Some examples may provide for a deck height adjustment assembly for a riding lawn care vehicle. The assembly may include a carriage assembly that may operably couple a frame of the riding lawn care vehicle to a cutting deck of the riding lawn care vehicle, and a rotary assembly that may be configured to set a height for the cutting deck. The carriage assembly and the rotary assembly may each be operable by an operator of the riding lawn care vehicle from an operating position of the riding lawn care vehicle.

The exemplary deck height adjustment assembly may include additional features, modifications, augmentations and/or the like to achieve further objectives or enhance the performance of the deck height adjustment assembly. The additional features, modifications, augmentations and/or the like may be added in any combination with each other. Below is a list of various additional features, modifications, and augmentations that can each be added individually or in any combination with each other. For example, the rotary assembly may comprise a rotary selector, a bevel gear assembly and a deck height spacer. In an example, the rotary selector may be operably coupled to the bevel gear assembly to transmit torque from the rotary selector to the bevel gear assembly. In some cases, the bevel gear assembly may be operably coupled to the deck height spacer to transmit torque from the rotary selector to the deck height spacer. In an example, the carriage assembly may comprise a pedal and a height selector arm. In some cases, the pedal may be operably coupled to the height selector arm such that the height selector arm may move from an engaged state with the deck height spacer to a disengaged state responsive to the operator engaging the pedal. In an example, the carriage assembly may further include a pivot bar, a first bell crank, a second bell crank, a third bell crank and a fourth bell crank. In some cases, the pivot bar may operably couple the pedal to the first bell crank at a first end of the pivot bar and to the second bell crank at a second end of the pivot bar. In an example, the first bell crank may be operably coupled to the third bell crank via a first linking rod and the second bell crank may be operably coupled to the fourth bell crank via a second linking rod. In some cases, the first bell crank, the second bell crank, the third bell crank and the fourth bell crank may each be operably coupled to the cutting deck and may be configured to lift the cutting deck responsive to the operator engaging the pedal. In an example, the height selector arm may be integrated into the fourth bell crank. In some cases, the first bell crank may move the third bell crank via the first linking rod responsive to the operator engaging the pedal. In an example, the second bell crank may move the fourth bell crank via the second linking rod responsive to the operator engaging the pedal. In some cases, the deck height spacer may comprise a cylindrical body that may be operably coupled to the bevel gear assembly. In an example, the cylindrical body may comprise a circumferential surface that may extend in an axial direction, a base portion and a plurality of radial segments. In some cases, the circumferential surface of the cylindrical body may comprise a step-like structure wherein each of the plurality of radial segments may be disposed a greater distance away from the base portion than a previous radial segment in a clockwise direction around the circumferential surface. In an example, the height selector arm may be configured to contact the deck height spacer at one of the plurality of radial segments when the height selector arm may be in the engaged state. In some cases, each radial segment may comprise a retaining lip protruding in the axial direction perpendicular to the base portion which may retain the height selector arm in the engaged state. In an example, the rotary assembly may further comprise a feedback mechanism that may be configured to provide tactile feedback to the rotary selector responsive to the operator turning the rotary selector. In some cases, the feedback mechanism may comprise a washer and projections on a surface of the bevel gear assembly. In an example, the washer may be biased towards the projections and may provide a feedback response to the operator responsive to passing a projection as the bevel gear turns. In some cases, the rotary selector may comprise a selection indicator that may align with a height indication on a portion of the frame as the rotary selector may be turned by the operator. In an example, the deck height spacer may further comprise a reference protrusion on the base portion that may be configured to align with a reference notch in the bevel gear assembly which may assist with installing the rotary assembly in a proper orientation.

The riding lawn care vehicle of some embodiments may include additional features, modifications, augmentations and/or the like to achieve further objectives or enhance the performance of the riding lawn care vehicle. The additional features, modifications, augmentations and/or the like may be added in any combination with each other.

Many modifications and other embodiments of the invention set forth herein will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A riding lawn care vehicle (10, 10' 100) comprising:
a frame (60, 120) to which wheels (31, 32, 31', 32') of the riding lawn care vehicle (10, 100) are attachable;
a seat (20, 20', 110) configured to provide an operating position for an operator of the riding lawn care vehicle (10, 10' 100);
a cutting deck (40, 40', 140) operably coupled to the frame (60, 120) and comprising a cutting blade and a housing frame, wherein the housing frame is configured to support a housing inside which the cutting blade is housed; and
a deck height adjustment assembly (150) comprising a carriage assembly (154) and a rotary assembly (152), wherein the carriage assembly (154) and the rotary assembly (152) are operable by the operator positioned in the seat (20, 20', 110); wherein
the carriage assembly (154) is operably coupling the frame (60, 120) to the cutting deck (40, 40', 140) and the rotary assembly (152) is configured to set a height for the cutting deck (40, 40', 140); wherein the rotary assembly (152) comprises a rotary selector (400, 500, 600), a bevel gear assembly (410) and a deck height spacer (420),
wherein the rotary selector (400, 500, 600) is operably coupled to the bevel gear assembly (410) to transmit torque from the rotary selector (400, 500, 600) to the bevel gear assembly (410), and
wherein the bevel gear assembly (410) is operably coupled to the deck height spacer (420) to transmit torque from the rotary selector (400, 500, 600) to the deck height spacer (420) , wherein the carriage assembly (154) comprises a pedal (450) and a height selector arm (440), and
wherein the pedal (450) is operably coupled to the height selector arm (440) such that the height selector arm (440) moves from an engaged state with the deck height spacer (420) to a disengaged state responsive to the operator engaging the pedal (450) , wherein the carriage assembly (154) further comprises a pivot bar (455), a first bell crank (460), a second bell crank (470), a third bell crank (480) and a fourth bell crank (490),
wherein the pivot bar (455) operably couples the pedal (450) to the first bell crank (460) at a first end of the pivot bar (455) and to the second bell crank (470) at a second end of the pivot bar (455),
wherein the first bell crank (460) is operably coupled to the third bell crank (480) via a first linking rod (465) and the second bell crank (470) is operably coupled to the fourth bell crank (490) via a second linking rod (475), and
wherein the first bell crank (460), the second bell crank (470), the third bell crank (480) and the fourth bell crank (490) are each operably coupled to the cutting deck (40, 40', 140) and configured to lift the cutting deck (40, 40', 140) responsive to the operator engaging the pedal (450) , wherein the height selector arm (440) is integrated into the fourth bell crank (490),
wherein the first bell crank (460) moves the third bell crank (480) via the first linking rod (465) responsive to the operator engaging the pedal (450), and
wherein the second bell crank (470) moves the fourth bell crank (490) via the second linking rod (475) responsive to the operator engaging the pedal (450) , wherein the deck height spacer (420) comprises a cylindrical body operably coupled to the bevel gear assembly (410),
wherein the cylindrical body comprises a circumferential surface (422) that extends in an axial direction, a base portion (424) and a plurality of radial segments (426), and
wherein the circumferential surface (422) of the cylindrical body comprises a step-like structure wherein each of the plurality of radial segments (426) is disposed a greater distance away from the base portion (424) than a previous radial segment (426) in a clockwise direction around the circumferential surface (422).

2. The riding lawn care vehicle (10, 10' 100) of claim 1, wherein the height selector arm (440) is configured to contact the deck height spacer (420) at one of the plurality of radial segments (426) when the height selector arm (440) is in the engaged state, and
wherein each radial segment (426) comprises a retaining lip (427) protruding in the axial direction perpendicular to the base portion (424) to retain the height selector arm (440) in the engaged state.

3. The riding lawn care vehicle (10, 10' 100) of claim 1, wherein the rotary assembly (152) further comprises a feedback mechanism configured to provide tactile feedback to the rotary selector (400, 500, 600) responsive to the operator turning the rotary selector (400, 500, 600),
wherein the feedback mechanism comprises a washer (432) and projections on a surface of the bevel gear assembly (410),
wherein the washer (432) is biased towards the projections and provides a feedback response to the operator responsive to passing a projection as the bevel gear turns.

4. The riding lawn care vehicle (10, 10' 100) of claim 3, wherein the rotary selector (400, 500, 600) comprises a selection indicator (620) that aligns with a height indication (510) on a portion of the frame (60, 120) as the rotary selector (400, 500, 600) is turned by the operator.

5. The riding lawn care vehicle (10, 10' 100) of claim 1, wherein the deck height spacer (420) further comprises a reference protrusion (428) on the base portion (424) that is configured to align with a reference notch (416) in the bevel gear assembly (410) to assist with installing the rotary assembly (152) in a proper orientation.

## Patentansprüche

1. Aufsitzrasenpflegegerät (10, 10', 100) umfassernd:
einen Rahmen (60, 120), an dem Räder (31, 32, 31', 32') des fahrbaren Rasenpflegegeräts (10, 100) befestigbar sind;
einen Sitz (20, 20', 110), der so ausgebildet oder konfiguriert ist, dass er eine Bedienposition für einen Bediener des Rasenpflegegeräts (10, 10', 100) bereitstellt;
ein Mähwerk (40, 40', 140), das funktionsfähig mit dem Rahmen (60, 120) gekoppelt ist und ein Messer und einen Gehäuserahmen umfasst, wobei der Gehäuserahmen so ausgebildet ist, dass er ein Gehäuse trägt, in dem das Messer untergebracht ist; und
eine Mähdeck-Höhenverstellvorrichtung (150), die eine Schlittenbaugruppe (154) und eine Drehbaugruppe (152) umfasst, wobei die Schlittenbaugruppe (154) und die Drehbaugruppe (152) von dem auf dem Sitz (20, 20', 110) positionierten Bediener betätigt werden können; wobei
die Schlittenbaugruppe (154) den Rahmen (60, 120) mit dem Mähdeck (40, 40', 140) betätigbar koppelt und die Drehbaugruppe (152) zum Einstellen einer Höhe für das Mähdeck ausgebildet oder konfiguriert ist (40, 40', 140) einzustellen; wobei die Drehbaugruppe (152) einen Drehwählschalter (400, 500, 600), eine Kegelradbaugruppe (410) und einen Mähwerkshöhenabstandhalter (420) umfasst,
wobei der Drehwählschalter (400, 500, 600) funktionsfähig mit der Kegelradbaugruppe (410) gekoppelt ist, um Drehmoment vom Drehwählschalter (400, 500, 600) auf die Kegelradbaugruppe (410) zu übertragen, und
wobei die Kegelradbaugruppe (410) funktionsfähig mit dem Mähwerkshöhenabstandhalter (420) gekoppelt ist, um Drehmoment vom Drehwählschalter (400, 500, 600) auf den Mähwerkshöhenabstandhalter (420) zu übertragen, wobei die Schlittenbaugruppe (154) ein Pedal (450) und einen Höhenwahlhebel (440) umfasst, und
wobei das Pedal (450) funktionsfähig mit dem Höhenwahlhebel (440) gekoppelt ist, so dass sich der Höhenwahlhebel (440) aus einem Eingriffszustand mit dem Mähwerkshöhenabstandhalter (420) in einen Ausrückzustand bewegt, wenn der Bediener das Pedal (450) betätigt, wobei die Schlittenbaugruppe (154) ferner eine Schwenkstange (455), eine erste Umlenkhebel (460), eine zweite Umlenkhebel (470), eine dritte Umlenkhebel (480) und eine vierte Umlenkhebel (490),
wobei die Schwenkstange (455) das Pedal (450) an einem ersten Ende der Schwenkstange (455) mit dem ersten Umlenkhebel (460) und an einem zweiten Ende der Schwenkstange (455) mit dem zweiten Umlenkhebel (470) funktionsfähig verbindet,
wobei der erste Umlenkhebel (460) über eine erste Verbindungsstange (465) funktionsfähig mit dem dritten Umlenkhebel (480) gekoppelt ist und der zweite Umlenkhebel (470) über eine zweite Verbindungsstange (475) funktionsfähig mit dem vierten Umlenkhebel (490) gekoppelt ist, und
wobei der erste Umlenkhebel (460), der zweite Umlenkhebel (470), der dritte Umlenkhebel (480) und der vierte Umlenkhebel (490) jeweils funktionsfähig mit dem Mähwerk (40, 40', 140) gekoppelt und so ausgebildet oder konfiguriert sind, dass sie das Mähwerk anheben (40, 40', 140), wenn der Bediener das Pedal (450) betätigt, wobei der Höhenwahlhebel (440) in den vierten Umlenkhebel (490) integriert ist,
wobei der erste Umlenkhebel (460) den dritten Umlenkhebel (480) über die erste Verbindungsstange (465) bewegt, wenn der Bediener das Pedal (450) betätigt, und
wobei der zweite Umlenkhebel (470) den vierten Umlenkhebel (490) über die zweite Verbindungsstange (475) in Reaktion auf das Betätigen des Pedals (450) durch den Bediener bewegt, wobei der Mähwerkhöhenabstandhalter (420) einen zylindrischen Körper umfasst, der funktionsfähig mit der Kegelradbaugruppe (410) gekoppelt ist,
wobei der zylindrische Körper eine Umfangsfläche (422), die sich in axialer Richtung erstreckt, einen Basisabschnitt (424) und mehrere Radialsegmente (426) umfasst, und
wobei die Umfangsfläche (422) des zylindrischen Körpers eine stufenartige Struktur aufweist, wobei jedes der mehreren Radialsegmente (426) in einem größeren Abstand vom Basisabschnitt (424) angeordnet ist als ein vorheriges Radialsegment (426) in Uhrzeigerrichtung um die Umfangsfläche (422).

2. Aufsitzrasenpflegegerät (10, 10', 100) nach Anspruch 1, wobei der Höhenwahlhebel (440) so ausgebildet oder konfiguriert ist, dass er den Mähwerkshöhenabstandhalter (420) an einem der mehreren Radialsegmente (426) berührt, wenn sich der Höhenwahlhebel (440) im Eingriffszustand befindet, und
wobei jedes Radialsegment (426) eine Halte-Lippe (427) aufweist, die in axialer Richtung senkrecht zum Basisabschnitt (424) vorsteht, um den Höhenwahlhebel (440) im Eingriffszustand zu halten.

3. Aufsitzrasenpflegegerät (10, 10', 100) nach Anspruch 1, wobei die Drehbaugruppe (152) ferner einen Rückmeldemechanismus umfasst, der so ausgebildet oder konfiguriert ist, dass er dem Drehwählschalter (400, 500, 600) eine taktile Rückmeldung gibt, wenn der Bediener den Drehwählschalter (400, 500, 600) dreht,
wobei der Rückmeldungsmechanismus eine Unterlegscheibe (432) und Vorsprünge an einer Oberfläche der Kegelradbaugruppe (410) umfasst,
wobei die Unterlegscheibe (432) in Richtung der Vorsprünge vorgespannt ist und dem Bediener eine Rückmeldung gibt, wenn ein Vorsprung beim Drehen des Kegelrads passiert wird.

4. Aufsitzrasenpflegegerät (10, 10', 100) nach Anspruch 3, wobei der Drehwählschalter (400, 500, 600) eine Auswahlanzeige (620) umfasst, die sich mit einer Höhenanzeige (510) an einem Teil des Rahmens (60, 120) ausrichtet, wenn der Drehwählschalter (400, 500, 600) vom Bediener gedreht wird.

5. Aufsitzrasenpflegegerät (10, 10', 100) nach Anspruch 1, wobei der Mähwerkshöhenabstandhalter (420) ferner einen Referenzvorsprung (428) an dem Basisabschnitt (424) umfasst, der so ausgebildet oder konfiguriert ist, dass er mit einer Referenzkerbe (416) in der Kegelradbaugruppe (410) fluchtet, um die Installation der Drehbaugruppe (152) in einer korrekten Ausrichtung zu unterstützen.

## Revendications

1. Véhicule autoporté pour l'entretien des pelouses (10, 10', 100) comprenant:
un châssis (60, 120) auquel peuvent être fixées les roues (31, 32, 31', 32') du véhicule autoporté pour l'entretien des pelouses (10, 100);
un siège (20, 20', 110) configuré pour fournir une position de conduite à un opérateur du véhicule autoporté pour l'entretien des pelouses (10, 10', 100);
un plateau de coupe (40, 40', 140) couplé de manière opérationnelle au châssis (60, 120) et comprenant une lame de coupe et un châssis de boîtier, dans lequel le châssis de boîtier est configuré pour supporter un boîtier à l'intérieur duquel la lame de coupe est logée; et
un ensemble de réglage de la hauteur du plateau (150) comprenant un ensemble de chariot (154) et un ensemble rotatif (152), dans lequel l'ensemble de chariot (154) et l'ensemble rotatif (152) peuvent être actionnés par l'opérateur positionné dans le siège (20, 20', 110); dans lequel
l'ensemble chariot (154) est couplé de manière opérationnelle au châssis (60, 120) et au plateau de coupe (40, 40', 140) et l'ensemble rotatif (152) est configuré pour régler la hauteur du plateau de coupe (40, 40', 140); dans lequel l'ensemble rotatif (152) comprend un sélecteur rotatif (400, 500, 600), un ensemble d'engrenages coniques (410) et une entretoise de hauteur de plateau (420),
dans lequel le sélecteur rotatif (400, 500, 600) est couplé de manière opérationnelle à l'ensemble d'engrenages coniques (410) pour transmettre le couple du sélecteur rotatif (400, 500, 600) à l'ensemble d'engrenages coniques (410), et
dans lequel l'ensemble d'engrenages coniques (410) est couplé de manière opérationnelle à l'entretoise de hauteur de plate-forme (420) pour transmettre le couple du sélecteur rotatif (400, 500, 600) à l'entretoise de hauteur de plate-forme (420), dans lequel l'ensemble de chariot (154) comprend une pédale (450) et un bras de sélecteur de hauteur (440), et
dans lequel la pédale (450) est couplée de manière opérationnelle au bras de sélecteur de hauteur (440) de telle sorte que le bras de sélecteur de hauteur (440) se déplace d'un état engagé avec l'entretoise de hauteur de plate-forme (420) à un état désengagé en réponse à l'engagement de la pédale (450) par l'opérateur, dans lequel l'ensemble de chariot (154) comprend en outre une barre pivotante (455), un premier levier coudé (460), un deuxième levier coudé (470), un troisième levier coudé (480) et un quatrième levier coudé (490),
dans lequel la barre pivotante (455) relie de manière opérationnelle la pédale (450) au premier levier coudé (460) à une première extrémité de la barre pivotante (455) et au deuxième levier coudé (470) à une deuxième extrémité de la barre pivotante (455),
dans lequel le premier levier coudé (460) est couplé de manière opérationnelle au troisième levier coudé (480) via une première tige de liaison (465) et le deuxième levier coudé (470) est couplé de manière opérationnelle au quatrième levier coudé (490) via une deuxième tige de liaison (475), et
dans lequel le premier levier coudé (460), le deuxième levier coudé (470), le troisième levier coudé (480) et le quatrième levier coudé (490) sont chacun couplés de manière opérationnelle au plateau de coupe (40, 40', 140) et configurés pour soulever le plateau de coupe (40, 40', 140) en réponse à l'actionnement de la pédale (450) par l'opérateur, dans lequel le bras de sélection de hauteur (440) est intégré dans le quatrième levier coudé (490),
dans lequel le premier levier coudé (460) déplace le troisième levier coudé (480) via la première tige de liaison (465) en réponse à l'actionnement de la pédale (450) par l'opérateur, et
dans lequel le deuxième levier coudé (470) déplace le quatrième levier coudé (490) via la deuxième tige de liaison (475) en réponse à l'actionnement de la pédale (450) par l'opérateur, dans lequel l'entretoise de hauteur de plateau (420) comprend un corps cylindrique couplé de manière opérationnelle à l'ensemble d'engrenages coniques (410),
dans lequel le corps cylindrique comprend une surface circonférentielle (422) qui s'étend dans une direction axiale, une partie de base (424) et une pluralité de segments radiaux (426), et
dans lequel la surface circonférentielle (422) du corps cylindrique comprend une structure en gradins dans laquelle chacun de la pluralité de segments radiaux (426) est disposé à une plus grande distance de la partie de base (424) qu'un segment radial précédent (426) dans le sens horaire autour de la surface circonférentielle (422).

2. Véhicule de entretien de pelouse à conducteur porté (10, 10', 100) selon la revendication 1, dans lequel le bras de sélection de hauteur (440) est configuré pour entrer en contact avec l'entretoise de hauteur de plateau (420) au niveau de l'un des segments radiaux (426) lorsque le bras de sélection de hauteur (440) est dans l'état engagé, et
dans lequel chaque segment radial (426) comprend une lèvre de retenue (427) faisant saillie dans la direction axiale perpendiculaire à la partie de base (424) pour retenir le bras de sélection de hauteur (440) dans l'état engagé.

3. Véhicule de tonte de pelouse (10, 10', 100) selon la revendication 1, dans lequel l'ensemble rotatif (152) comprend en outre un mécanisme de rétroaction configuré pour fournir une rétroaction tactile au sélecteur rotatif (400, 500, 600) en réponse à la rotation du sélecteur rotatif (400, 500, 600) par l'opérateur,
dans lequel le mécanisme de rétroaction comprend une rondelle (432) et des saillies sur une surface de l'ensemble d'engrenages coniques (410),
dans lequel la rondelle (432) est sollicitée vers les saillies et fournit une réponse de rétroaction à l'opérateur en réponse au passage d'une saillie lorsque l'engrenage conique tourne.

4. Véhicule de jardinage autoporté (10, 10', 100) selon la revendication 3, dans lequel le sélecteur rotatif (400, 500, 600) comprend un indicateur de sélection (620) qui s'aligne avec une indication de hauteur (510) sur une partie du châssis (60, 120) lorsque le sélecteur rotatif (400, 500, 600) est tourné par l'opérateur.

5. Véhicule autoporté pour l'entretien des pelouses (10, 10', 100) selon la revendication 1, dans lequel l'entretoise de hauteur de plateau (420) comprend en outre une saillie de référence (428) sur la partie de base (424) qui est configurée pour s'aligner avec une encoche de référence (416) dans l'ensemble d'engrenages coniques (410) afin de faciliter l'installation de l'ensemble rotatif (152) dans une orientation correcte.
